# EUROPÄISCHE PATENTSCHRIFT

(11) **EP 1 664 563 B1**
(45) Veröffentlichungstag und Bekanntmachung des Hinweises auf die Patenterteilung: **31.12.2008**
(21) Anmeldenummer: 04765208.6
(22) Anmeldetag: 15.09.2004
(51) Int. Cl.: F16D 3/20, C21D 9/00, C23C 8/80

(54) **VERFAHREN ZUR HERSTELLUNG VON GELENKBAUTEILEN MIT VERBESSERTER VERSCHLEISSFESTIGKEIT**
METHOD FOR PRODUCING JOINT COMPONENTS HAVING AN IMPROVED RESISTANCE TO WEAR AND TEAR
PROCEDE DE FABRICATION D'ELEMENTS D'ARTICULATION A PROPRIETES D'USURE AMELIOREES

(43) Veröffentlichungstag der Anmeldung: 07.06.2006
(73) Patentinhaber: GKN Driveline International GmbH, 53797 Lohmar (DE)
(72) Erfinder: WELSCHOF, Hans-Heinrich, 63517 Rodenbach (DE); HILDEBRANDT, Wolfgang, 53721 Siegburg (DE); REHER, Frank, 57482 Wenden (DE)
(74) Vertreter: Maxton Langmaack & Partner
(86) Internationale Anmeldenummer: PCT/EP2004/010294
(87) Internationale Veröffentlichungsnummer: WO 2006/029641

(56) Entgegenhaltungen:
- WO-A-03/025233
- US-A- 3 929 523
- US-A- 4 741 785
- US-A- 6 126 897

## Beschreibung

Die vorliegende Erfindung betrifft ein Verfahren zur Herstellung von Gelenkbauteilen zur Verbesserung von deren Verschleißfestigkeit.

Gelenkbauteile, beispielsweise solche für Gleichlaufgelenke, werden üblicherweise im Gesenkschmiedeverfahren, aber auch durch Bearbeitung von Rohren, Stangen o.ä. hergestellt. Besonders beansprucht bei Gelenkbauteilen sind insbesondere die Laufflächen der Gelenk-Außen- und der Gelenk-Innenteile. Hier treten oftmals im Betrieb derselben Risse auf, wodurch die Gelenkbauteile entsprechend schneller verschleißen.

Üblicherweise werden Gelenkbauteile, und zwar sowohl Gelenkkäfige, Gelenk-Außen- als auch Gelenk-Innenteile aus induktiv härtbarem Baustahl mit einem Kohlenstoffgehalt in einem Bereich von etwa 0,45 bis etwa 0,55 Gew%, bezogen auf die Gesamtmenge an Stahl, hergestellt. Derartige Baustähle wie beispielsweise der normierte Kohlenstoffbaustahl CF53 mit einem Kohlenstoffgehalt von etwa 0,5 Gew%, bezogen auf die Gesamtmenge an Stahl, werden typischerweise zur Herstellung von Gelenkbauteilen eingesetzt. Nach dem Stand der Technik werden derartig hergestellte Formteile anschließend mittels beispielsweise Induktionshärtung gehärtet, wobei durch die Induktionshärtung eine relativ feinkörnige, verschleißfeste Oberfläche erhalten wird. Nachteilig dabei ist jedoch die geringe Härte der Bauteile als auch insbesondere der geringe Widerstand gegen eine Rissausbreitung.

US 3,929,523 offenbart die Herstellung von Gelenkbauteilen mit einer Oberflächensicht, wobei diese Oberflächensicht mit einer "Quasi-Karbid"-Struktur versehen wurde. Unter eine "Quasi-Karbid"-Struktur im Sinne der US 3,929,523 ist dabei eine solche Struktur zu verstehen, bei welcher Quasi-Karbid in 15 bis 80 Volumen% in einer martensitischen Matrix verteilt ist, wobei die Größe der Quasi-Karbidpartikel 0,2 bis 10 µm im Durchmesser beträgt. Dabei wird Quasi-Karbid nicht durch langsames Lösen von granularem Zementit, wobei dann auch Austenit entstehen würde, sondern in einem einschrittigen Verfahren hergestellt.

US 6,126,897 offenbart einen speziellen Stahl, wobei dieser eine Aufkohlung bei einer Temperatur von 930° C mit einer nachfolgenden Abschreckung und einem sich hieran anschließenden Anlassen bei 170° C offenbart. Der Stahl weist dabei 0,1 bis 0,25 % Kohlenstoff auf.

Es ist Aufgabe der vorliegenden Erfindung, ein Verfahren zur Herstellung von Gelenkbauteilen mit verbesserter Verschleißfestigkeit und insbesondere einem erhöhten Widerstand gegen eine Rissausbreitung zur Verfügung zu stellen.

Diese Aufgabe wird erfindungsgemäß gelöst durch ein eben solches Verfahren, wobei
- in einem ersten Schritt ein aus einem Stahl mit einem Kohlenstoffanteil in einem Bereich von etwa 0,4 bis etwa 0,6 Gew%, bezogen auf die Gesamtmenge des Stahls, hergestelltes Gelenkbauteil zumindest teilflächig bis zu einer Tiefe, ausgehend von der Oberfläche des Bauteils, von max. 0,5 mm aufgekohlt wird bis zu einem Kohlenstoffanteil von bis zu 1,3 Gew%, bezogen auf die Gesamtmenge des Stahls; und
- in einem zweiten Schritt das aufgekohlte Gelenkbauteil gehärtet wird bis zu einer Tiefe , die größer ist als die im ersten Schritt durch Aufkohlung erhaltene, vorteilhafterweise bis zu einer Tiefe von etwa 2 mm, wobei die Tiefe gemessen wird ausgehend von der Oberfläche des Bauteils.

Gelenkbauteile im Sinne der vorliegenden Erfindung sind insbesondere Gelenkkäfige, Gelenk-Außen- und Gelenk-Innenteile.

Vorzugsweise erfolgt dabei die Härtung im zweiten Schritt induktiv, möglich wäre jedoch auch eine Ofen- oder Flammhärtung. Mit dem erfindungsgemäßen Verfahren werden vorteilhafterweise Gelenkbauteile mit einer erhöhten Verschleißfestigkeit und einem verbesserten Widerstand gegen Rissausbreitung erhalten. Die Oberflächenbereiche der mit dem erfindungsgemäßen Verfahren hergestellten Bauteile weisen eine höhere Härte im Vergleich zu üblichem CF53-Stahl auf. Der Kern der hergestellten Gelenkbauteile ist gleichwohl duktil als auch tragfähig. Da bei den angegebenen Kohlenstoffgehalten von bis zu 1,3 Gew%, bevorzugt Kohlenstoffgehalte in einem Bereich von etwa 0,7 bis etwa 1, 2 Gew%, noch weiter bevorzugt Kohlenstoffgehalte in einem Bereich von etwa 0,8 bis etwa 1,1 Gew%, neben Martensit auch noch Restaustenit vorliegt, weisen die solchermaßen hergestellten Gelenkbauteile selbstergänzende Eigenschaften auf. "Selbstergänzend" im Sinne der vorliegenden Erfindung heißt, dass der in der gehärteten Oberflächenschicht vorhandene Restaustenit sich bei Verformung bzw. Umformung in Martensit umordnet. Hierdurch werden gleichbleibende Festigkeits- und Verschleißwerte der erfindungsgemäß hergestellten Bauteile über einen langen Zeitraum erzielt.

Die im ersten Schritt erfolgende Aufkohlung kann insbesondere als Gas- oder Salzbadaufkohlung durchgeführt werden, wobei diese als Carborierung oder Carbonitrierung erfolgen kann. Bevorzugt ist jedoch eine Gasaufkohlung in einer CO/CH₄-Atmosphäre, gegebenenfalls mit Zumischung von H₂ und/oder N₂.

Die Aufkohlung erfolgt bevorzugt bis zu einer Tiefe von mindestens etwa 0,1 mm über das Maximum der Hertzschen Pressung des Bauteils hinaus, gemessen ausgehend von der Oberfläche des Bauteils, daher bevorzugt bis zu einer Tiefe in einem Bereich von etwa 0,15 mm bis 0,35 mm, weiter bevorzugt etwa 0,2 mm bis etwa 0,3 mm, gemessen ausgehend von der Oberfläche des Gelenkbauteils. Weiter bevorzugt erfolgt die Aufkohlung vollflächig, d.h. die Oberfläche des gesamten Formteils wird aufgekohlt. Letztendlich wird durch das erfindungsgemäße Verfahren ein zweischichtiger Aufbau der Oberflächenschicht von Gelenkbauteilen erhalten, wobei in der der Oberfläche nächsten Schicht Martensit mit Anteilen an Restaustenit vorliegt und in der sich hieran anschließenden Oberflächenschicht bis zu einer Tiefe von etwa 2 mm, bevorzugt etwa 0,8 mm bis etwa 1,5 mm, martensitisches Gefüge, allerdings ohne Restaustenit, vorliegt. Hieran schließt sich der ungehärtete und tragfähige Kern des gehärteten Gelenkbauteils an. Die Lebensdauer derartig hergestellter Gelenkbauteile ist vorteilhafterweise erheblich verlängert.

In der der Oberfläche nächsten Schicht liegt Restaustenit in einer Menge von etwa 5 Gew% bis etwa 35 Gew%, bevorzugt etwa 20 Gew% bis etwa 32 Gew%, jeweils bezogen auf die Gesamtmenge des eingesetzten Stahls, vor. Da Restaustenit duktil ist und eine hohe Härte aufweist, bleiben einmal entstandene Risse an der Oberfläche des Bauteils stecken, der Riss läuft nicht durch. Dadurch treten Schäden an den erfindungsgemäß hergestellten Gelenkbauteilen erst bei einer im Vergleich zu den aus dem Stand der Technik bekannten deutlich höheren Anzahl von Lastwechseln (insbesondere Überrollungen) auf.

In einer bevorzugten Ausführungsform wird im ersten Schritt des erfindungsgemäßen Verfahrens ein Baustahl eingesetzt, welcher im Wesentlichen frei von Zinn, Arsen und/oder Antimon ist. Insbesondere die Freiheit bzw. das Vorliegen von Antimon in möglichst geringen Anteilen ist für die Aufkohlung im ersten Schritt des erfindungsgemäßen Verfahrens wichtig, da sich durch insbesondere Antimon die Dauer der Aufkohlung erheblich verlängert und hierdurch das erfindungsgemäße Verfahren unter Kostengesichtspunkten u.U. nicht mehr wirtschaftlich tragbar durchgeführt werden könnte.

Vorzugsweise erfolgt die Aufkohlung im ersten Schritt des erfindungsgemäßen Verfahrens bei einer Temperatur in einem Bereich von etwa 800°C bis etwa 1.000°C, bevorzugt in einem Bereich zwischen 850°C und 950°C. Die Aufkohlung wird dabei vorteilhafterweise über eine Dauer von etwa 2 bis 6 Stunden vorgenommen, weiter bevorzugt über eine Dauer von etwa 3 bis etwa 4 Stunden. Nach der Aufkohlung wird das aufgekohlte Formteil bis zu einer Temperatur von etwa 250°C so langsam abgekühlt, bevorzugt in Ofenatmosphäre, dass eine martensitische Umwandlung nicht stattfindet.

Vorteilhafterweise wird die im zweiten Schritt erfolgende Induktionshärtung bei einer Frequenz in einem Bereich von etwa 5 KHz bis etwa 45 kHz durchgeführt. Dabei erfolgt die Härtung vorteilhafterweise mit einer Leistung in einem Bereich zwischen 100 kW und 300 kW, weiter bevorzugt von 150 kW bis 250 kW, über eine Heizzeit in einem Bereich von etwa 1 bis 15 Sek., bevorzugt 2 bis 10 Sek. Anschließend wird das induktionsgehärtete Formteil in einer Polymerlösung, welche eine Temperatur bevorzugt in einem Bereich von etwa 20°C bis etwa 40°C aufweist, abgeschreckt. Bei einer Induktionshärtung mit derartigen Parametern wird eine zweite, unter der äußeren Oberflächenschicht liegende etwas weichere martensitische Gefügestruktur erzielt, welche vorteilhafterweise die Oberflächenschicht unterstützt.

In einer alternativen Ausführungsform des erfindungsgemäßen Verfahrens kann vorgesehen sein, dass der zweite Schritt unterteilt wird in zwei Teilschritte für die Induktionshärtung bei unterschiedlichen Temperaturen, wobei die Temperatur im ersten Teilschritt wenigstens 750°C, und die Temperatur im zweiten, nachfolgenden Teilschritt maximal 300°C beträgt (Anlassen). Dabei liegt die im ersten Teilschritt gewählte Temperatur oberhalb der Umwandlungstemperatur des Kernmaterials des im ersten Schritt erhaltenen aufgekohlten Bauteils, so dass hier eine möglichst vollständige Umwandlung zu Martensit erhalten wird. Im zweiten Teilschritt erfolgt ein Tempern des Bauteils (Anlassen).

Des Weiteren betrifft die vorliegende Erfindung ein mittels des erfindungsgemäßen Verfahrens hergestelltes Gelenkbauteil. Das mittels des erfindungsgemäßen Verfahrens erhaltene Formteil mit gehärteten Oberflächen kann noch beispielsweise durch Schleifen oder Hartfräsen weiter bearbeitet werden.

Die Erfindung wird anhand der nachfolgenden Figur näher erläutert. Diese zeigt:
- Fig. 1:: Schematischer Aufbau der Oberflächenschicht von mittels des erfindungsgemäßen Verfahrens hergestellten Gelenkbauteilen mit dem Verlauf sowohl des Kohlenstoffanteils als auch der Härte.

Der obere Teil der Fig. 1 zeigt einen mit dem Bezugszeichen 1 bezeichneten Teilausschnitt aus der Randschicht eines mittels des erfindungsgemäßen Verfahrens hergestellten Gelenkbauteils, beispielsweise eines Gleichlaufgelenk-Innenteils. Dieses weist ein Gefüge auf, welches Martensit 2 mit gegebenenfalls Spuren von Restaustenit sowie Ferrit bzw. Perlit 3 aufweist. In der äußersten, der Oberfläche 7 des Bauteils unmittelbar benachbarten Schicht 4 besteht das Gefüge ausschließlich aus Martensit 2 mit gegebenenfalls Anteilen an Restaustenit. An diese äußerste Schicht schließt sich eine weitere Schicht 5 an, welche eine Mischung aus Martensit 2 mit Ferrit bzw. Perlit 3 ist. An die Schicht 5 schließt sich der weichere Kern 6 an, welcher ausschließlich aus Ferrit bzw. Perlit 3 besteht.

Im mittleren Teil der Fig. 1 ist schematisch der Verlauf des Kohlenstoffgehalts ausgehend von der Oberfläche des gezeigten Ausschnitts des Gelenkbauteils wiedergegeben. Gut erkennbar ist, dass der Kohlenstoffgehalt von einem Wert von etwa 1,1 Gew%, bezogen auf die Gesamtmenge an Stahl, unmittelbar benachbart der Oberfläche 7 des gezeigten Gelenkbauteils stetig über die äußerste Schicht 4 und die weitere Schicht 5 zum Kern 6 hin abnimmt, wobei der Kohlenstoffgehalt im Kern 7 gleichbleibend ist.

Im unteren Teil der Fig. 1 schließlich ist schematisch angedeutet der Verlauf der Härte H, welche angegeben sein kann als Rockwell-Härte oder aber als Vickers-Härte. Der Härteverlauf ist als sigmoidal zu benennen, und die Härte nimmt ausgehend von der Oberfläche 7 des Bauteils in Richtung auf den Kern 6 hin im Bereich der äußersten Schicht 4 nicht ab, sondern bleibt in etwa gleich. Im Bereich der Zwischenschicht 5 nimmt die Härte relativ schnell ab, um im Kernbereich 6 des hergestellten Formteils wieder gleichmäßige Werte anzunehmen.

### Beispiel:

Ein warmgeschmiedetes Gleichlaufgelenk-Innenteil aus Baustahl CF53 mit einem Kohlenstoffgehalt von etwa 0,5 Gew% wurde in einem ersten Schritt aufgekohlt auf einen Kohlenstoffanteil in der äußersten Schicht 4 bis zu einer Tiefe von etwa 0,25 mm. Die Aufkohlung wurde dabei bei einer Temperatur von etwa 930°C über eine Dauer von 3 bis 4 Std. in einer CO/CH₄-Atmosphäre durchgeführt. Anschließend wies die Oberflächenschicht 4 einen Kohlenstoffgehalt von etwa 1,1 Gew% auf.

In einem zweiten Schritt wurde das aufgekohlte Formteil induktiv gehärtet bei einer Frequenz von 8 kHz und einer Leistung von 260 KW über eine Heizzeit von etwa 2,5 bis 3 sec. und einem Kopplungsabstand von etwa 1,5 mm zwischen Bauteil und Induktor. Anschließend wurde das solchermaßen induktiv gehärtete Bauteil in einer etwa 12%igen Polymerlösung des von der Firma Petrofer Chemie HR Fischer GmbH & Co. KG, Hildesheim, Deutschland, unter der Bezeichnung Aquatensid LBF vertriebenen Polymers mit einer Temperatur von etwa 28°C über etwa 5 bis 6 sec. abgeschreckt. Anschließend wurde das Bauteil noch für 1,5 h bis etwa 185°C angelassen. Das solchermaßen induktiv gehärtete Formteil wies nunmehr zusätzlich eine Zwischenschicht 5 bis zu einer Tiefe von etwa 0,9 mm, gemessen ausgehend von der Oberfläche 7 des Gleichlaufgelenk-Innenteils, auf.

Das solchermaßen hergestellte Gleichlaufgelenk-Innenteil wies zudem Anteile an Restaustenit in der äußersten Schicht 4 auf, wodurch das erfindungsgemäß hergestellte Gleichlaufgelenk-Innenteil selbstergänzende Eigenschaften aufwies.

Mit der vorliegenden Erfindung wird ein Verfahren zur Verfügung gestellt, durch welches relativ kostengünstige Baustähle mit hochfesten Oberflächeneigenschaften versehen werden können, wodurch die solchermaßen hergestellten Gelenkbauteile deutlich verbesserte Verschleißeigenschaften und hierdurch eine erhöhte Lebensdauer aufweisen.

## Patentansprüche

1. Verfahren zur Herstellung von Gelenkbauteilen, wobei
- in einem ersten Schritt ein aus einem Stahl mit einem Kohlenstoffanteil in einem Bereich von etwa 0,4 bis etwa 0,6 Gew%, bezogen auf die Gesamtmenge des Stahls, hergestelltes Gelenkbauteil zumindest teilflächig bis zu einer Tiefe, ausgehend von der Oberfläche des Formteils, von maximal 0,5 mm aufgekohlt wird bis zu einem Kohlenstoffanteil von bis zu 1,3 Gew%, bezogen auf die Gesamtmenge des Stahls; und
- in einem zweiten Schritt das aufgekohlte Gelenkbauteil gehärtet wird bis zu einer Tiefe, die großer ist als die im ersten Schritt durch Aufkohlung erhaltene.

2. Verfahren gemäß Anspruch 1, **dadurch gekennzeichnet, dass** die Härtung im zweiten Schritt induktiv erfolgt.

3. Verfahren gemäß Anspruch 1, **dadurch gekennzeichnet, dass** der im ersten Schritt eingesetzte Stahl im Wesentlichen frei von Zinn, Arsen und/oder Antimon ist.

4. Verfahren gemäß einem der vorhergehenden Ansprüche, **dadurch gekennzeichnet, dass** die Aufkohlung im ersten Schritt bei einer Temperatur in einem Bereich von etwa 800 bis etwa 1000°C erfolgt.

5. Verfahren gemäß einem der vorhergehenden Ansprüche, **dadurch gekennzeichnet, dass** die Aufkohlung im ersten Schritt über eine Dauer von etwa 2 bis 6 Stunden vorgenommen wird.

6. Verfahren gemäß einem der vorhergehenden Ansprüche, **dadurch gekennzeichnet, dass** die Induktionshärtung im zweiten Schritt bei einer Frequenz in einem Bereich von etwa 8 bis etwa 15 kHz durchgeführt wird.

7. Verfahren gemäß einem der vorhergehenden Ansprüche, **dadurch gekennzeichnet, dass** der zweite Schritt unterteilt ist in zwei Teilschritte bei unterschiedlichen Temperaturen, wobei die Temperatur im ersten Teilschritt wenigstens 750°C beträgt und die Temperatur im zweiten, nachfolgenden Teilschritt maximal 300°C beträgt.

## Claims

1. A method of producing joint components, wherein
- in a first step, a joint component manufactured from a steel with a carbon content in a range from approximately 0.4 to approximately 0.6 percent by weight, related to the total amount of steel, is carburized over at least part of its surface down to a depth, starting from the surface of the shaped part, of at most 0.5 mm so as to have a carbon content of up to 1.3 percent by weight, related to the total amount of steel; and
- in a second step, the carburized joint component is hardened down to a depth which is greater than that obtained in the first step by carburization.

2. A method according to claim 1, **characterised in that** the hardening in the second step takes place in an inductive manner.

3. A method according to claim 1, **characterised in that** the steel used in the first step is substantially free from tin, arsenic and/or antimony.

4. A method according to any one of the preceding clams, **characterised in that** the carburization in the first step takes place at a temperature in a range from approximately 800 to approximately 1000°C.

5. A method according to any one of the preceding claims, **characterised in that** the carburization in the first step is carried out over a duration of approximately 2 to 6 hours.

6. A method according to any one of the preceding claims, **characterised in that** the induction hardening in the second step is carried out at a frequency in a range from approximately 8 to approximately 15 kHz.

7. A method according to any one of the preceding claims, **characterised in that** the second step is divided into two partial steps at different temperatures, the temperature in the first partial step being at least 750°C and the temperature in the second, subsequent partial step being at most 300°C.

## Revendications

1. Procédé de fabrication d'éléments d'articulation dans lequel
- dans une première étape, un élément d'articulation, fabriqué dans un acier avec une teneur en carbone située dans la plage allant d'environ 0,4% jusqu'à environ 0,6% en poids de la masse totale, est cémenté au carbone au moins sur une partie de sa surface jusqu'à une profondeur maximale de 0,5 mm, par rapport à la surface de la pièce de forme, jusqu'à une teneur en carbone allant jusqu'à 1,3% en poids de la masse totale de l'acier ; et
- dans une seconde étape, l'élément d'articulation cémenté est durci jusqu'à une profondeur supérieure à celle obtenue par cémentation dans la première étape.

2. Procédé selon la revendication 1, **caractérisé en ce que** le durcissement est effectué par induction dans la deuxième étape.

3. Procédé selon la revendication 1, **caractérisé en ce que** l'acier utilisé dans la première étape est essentiellement sans zinc, arsenic ni/ou sans antimoine.

4. Procédé selon l'une des revendications précédentes, **caractérisé en ce que** la cémentation de la première étape s'effectue à une température située dans la plage de 800 à 1 000°C.

5. Procédé selon l'une des revendications précédentes, **caractérisé en ce que** la cémentation de la première étape est effectuée sur une durée d'environ 2 à 6 heures.

6. Procédé selon l'une des revendications précédentes, **caractérisé en ce que** le durcissage par induction de la seconde étape s'effectue à une fréquence se situant dans une plage d'environ 8 à 15 MHz.

7. Procédé selon l'une des revendications précédentes, **caractérisé en ce que** la seconde étape est divisée en deux parties ayant des températures différentes, la température dans la première partie faisant au moins 750°C et la température dans la seconde partie consécutive faisant 300°C au maximum.
